# EUROPÄISCHE PATENTANMELDUNG

(11) **EP 4 361 068 A1**
(43) Veröffentlichungstag der Anmeldung: **01.05.2024**
(21) Anmeldenummer: 23199175.3
(22) Anmeldetag: 22.09.2023
(51) Int. Cl.: B65G 21/14, B07B 1/00, B02C 21/02, B02C 23/02, B65G 41/00

(54) **MATERIALVERARBEITUNGSEINRICHTUNG UND VERFAHREN ZUR VERSTELLUNG EINER FÖRDEREINRICHTUNG EINER MATERIALVERARBEITUNGSEINRICHTUNG**

(30) Priorität: 28.10.2022 DE 102022128781
(71) Anmelder: KLEEMANN GMBH, 73037 Göppingen (DE)
(72) Erfinder: LÖHR, Felix, 73642 Welzheim (DE); WELLER, Christian, 73312 Geislingen (DE); SCHMID, Wolfgang, 73089 Rechberghausen (DE)
(74) Vertreter: Herrmann, Jochen

(57) **Zusammenfassung**

Die Erfindung betrifft eine Materialverarbeitungseinrichtung (1), insbesondere mobile Materialverarbeitungseinrichtung (1), mit einer Fördereinrichtung (10), insbesondere einem Förderband, zur Förderung von verarbeitetem und/oder zu verarbeitendem Material in einer Förderrichtung (FR) zwischen einem Aufnahmebereich (13) und einem Abwurfbereich (16) der Fördereinrichtung (10), wobei die Fördereinrichtung (10) einen ersten und einen zweiten Förderbereich (11, 12) aufweist, wobei der erste Förderbereich (11) im Bereich einer ersten Anbindung (15) um eine erstes Gelenk mit einer ersten Schwenkachse (15.1) schwenkbar an der Materialverarbeitungseinrichtung (1) angekoppelt ist, wobei der erste Förderbereich (11) und der zweite Förderbereich (12) mittels eines zweiten Gelenks mit einer zweiten Schwenkachse (25) miteinander verbunden sind, wobei der zweite Förderbereich (12) mittels eines dritten Gelenks im Bereich einer zweiten Anbindung (17) mit einem Zugmittel (30) verbunden ist, und wobei das erste, das zweite und das dritte Gelenk Teile eines Gelenkmechanismus bilden. Die Erfindung betrifft auch ein Verfahren zur Verstellung einer Fördereinrichtung (10) einer Materialverarbeitungseinrichtung (1).

## Beschreibung

Die Erfindung betrifft eine Materialverarbeitungseinrichtung, insbesondere eine mobile Materialverarbeitungseinrichtung, mit einer Fördereinrichtung, insbesondere einem Förderband, zur Förderung von verarbeitetem und/oder zu verarbeitendem Material in einer Förderrichtung zwischen einem Aufnahmebereich und einem Abwurfbereich der Fördereinrichtung, wobei die Fördereinrichtung einen ersten und einen zweiten Förderbereich aufweist.

Die Erfindung betrifft auch ein Verfahren zur Verstellung einer Fördereinrichtung einer Materialverarbeitungseinrichtung.

Aus US 2006/0180436 ist ein Seitenaustragsband für eine Gesteinsverarbeitungsanlage bekannt. Das Seitenaustragsband weist einen ersten Transportabschnitt auf, der mittels eines ersten Rahmenabschnitts fest mit einem Rahmen der Gesteinsverarbeitungsanlage verbunden ist. Um eine vertikale erste Achse schwenkbar mit dem ersten Rahmenabschnitt verbunden ist ein zweiter Rahmenabschnitt vorgesehen. Mit dem zweiten Rahmenabschnitt ist ein Zwischenabschnitt des Seitenaustragsbands verbunden. An den Zwischenabschnitt ist ein äußerer Abschnitt des Seitenaustragsbands um eine zweite Achse schwenkbar angebunden. Ferner sind Stützelemente in Form von Seilen zwischen einem äußeren Ende des Seitenaustragsbands und einem Befestigungspunkt an dem Rahmen der Gesteinsverarbeitungsanlage gespannt. Das Seitenaustragsband steht in einem Betriebszustand seitlich von der Gesteinsverarbeitungsanlage senkrecht vor. Um einen Transportzustand zu erreichen, wird das Seitenaustragsband um die erste Achse an die Gesteinsverarbeitungsanlage angeschwenkt. Da sich der Befestigungspunkt der Stützelemente an dem Rahmen der Gesteinsverarbeitungsanlage beabstandet von der ersten Achse befindet, kann sich das äußere Ende des Seitenaustragsbands hierbei absenken.

Aufgabe der Erfindung ist es, eine Materialverarbeitungseinrichtung bereitzustellen, deren Fördereinrichtung sich schnell, einfach und sicher zwischen einer platzsparenden Transportkonfiguration und einer Betriebskonfiguration verstellen lässt.

Aufgabe der Erfindung ist auch, ein einfaches, schnelles und sicheres Verfahren zur Verstellung einer Fördereinrichtung einer Materialverarbeitungseinrichtung bereitzustellen.

Die die Materialverarbeitungseinrichtung betreffende Aufgabe wird durch die Merkmale des Anspruchs 1 gelöst.

Die Fördereinrichtung weist demnach einen ersten und einen zweiten Förderbereich auf. Dadurch, dass der zweite Förderbereich mittels eines zweiten Gelenks mit einer zweiten Schwenkachse mit dem ersten Förderbereich verbunden ist, kann er gegenüber dem ersten Förderbereich zwischen einer eingeklappten Faltstellung und einer ausgeklappten Förderstellung verstellt werden. Somit kann eine für einen Transport der Fördereinrichtung und/oder der Materialverarbeitungseinrichtung geeignete, platzsparende Transportkonfiguration erreicht werden. So kann in der eingeklappten Faltstellung die Gesamtlänge der Fördereinrichtung, insbesondere in der Förderrichtung reduziert sein. Eine Gesamtlänge kann beispielsweise einen in Förderrichtung oder in Richtung einer Längserstreckung der Materialverarbeitungseinrichtung gemessenen Abstand zwischen dem Aufnahmebereich und dem Abwurfbereich darstellen.

Insbesondere kann der zweite Förderbereich in der Förderstellung im Wesentlichen die gleiche Orientierung aufweisen wie der erste Förderbereich, bevorzugt eine Orientierung in der Förderrichtung. In der Faltstellung kann der zweite Förderbereich in Richtung auf den ersten Förderbereich geschwenkt sein. Vorzugsweise kann der Abwurfbereich an dem zweiten Förderbereich vorgesehen sein sich und in der Faltstellung oberhalb des ersten Förderbereichs befinden.

Besonders vorteilhaft ist es für den Transport weiterhin, wenn eine gewünschte und/oder für den Transport zulässige Gesamthöhe der Materialverarbeitungseinrichtung nicht überschritten wird. So ist es denkbar, dass die Fördereinrichtung in einer für den Betrieb der Materialverarbeitungseinrichtung geeigneten Betriebskonfiguration gegenüber der Horizontalen um einen Anstellwinkel geneigt angeordnet ist. Somit kann ein Höhenunterschied zwischen dem Aufnahmebereich und dem Abwurfbereich der Fördereinrichtung hergestellt sein. Auf diese Weise kann beispielsweise verarbeitetes und/oder zu verarbeitendes Material beispielsweise von einem Aggregat, insbesondere einer Siebeinheit, zu einem weiteren Aggregat der Materialverarbeitungseinrichtung oder einer weiteren Materialverarbeitungseinrichtung, beispielsweise einem Brecher, geführt werden. Auch ist denkbar, dass verarbeitetes Material beispielsweise auf eine Halde geführt werden soll.

Bei einer entsprechend geneigten Fördereinrichtung kann die Gesamthöhe der Fördereinrichtung und/oder die Gesamthöhe der Materialverarbeitungseinrichtung somit auch von der Gesamtlänge der Fördereinrichtung, insbesondere in Förderrichtung, abhängig sein. Folglich kann, wenn in der Faltstellung des zweiten Förderbereichs die Gesamtlänge der Fördereinrichtung gegenüber der Betriebsstellung reduziert ist, auch eine reduzierte Gesamthöhe in der Transportkonfiguration erreicht werden.

Der erste Förderbereich ist im Bereich der ersten Anbindung um ein erstes Gelenk mit einer ersten Schwenkachse schwenkbar an der Materialverarbeitungseinrichtung angekoppelt. Der erste Förderbereich kann im Bereich der ersten Anbindung mittelbar oder unmittelbar mit der Materialverarbeitungseinrichtung gekoppelt sein. Die erste Anbindung kann das erste Gelenk bilden. So ist es denkbar, dass der erste Förderbereich im Bereich der ersten Anbindung mit einem Chassis der Materialverarbeitungseinrichtung verbunden ist. Ferner ist vorstellbar, dass der erste Förderbereich mit einem Maschinenteil der Materialverarbeitungseinrichtung verbunden ist, beispielsweise mit einem Gehäuse eines Aggregats der Materialverarbeitungseinrichtung, etwa mit einem Gehäuse einer Siebeinheit. Es kann auch vorgesehen sein, dass der erste Förderbereich im Bereich der ersten Anbindung mit einer Schwenkeinrichtung verbunden ist, die neben der Schwenkbarkeit um die erste Schwenkachse eine weitere Schwenkbarkeit um eine weitere Schwenkachse ermöglicht. Die Schwenkeinrichtung kann mittelbar oder unmittelbar mit der Materialverarbeitungseinrichtung verbunden sein, beispielsweise mit einem Chassis oder einem Maschinenteil.

Um ein unerwünschtes Verschwenken der Fördereinrichtung um die erste Schwenkachse, beispielsweise aus ihrem gewünschten Anstellwinkel Transport- oder Betriebskonfiguration, zu vermeiden, ist eine zweite Anbindung vorgesehen. Im Bereich der zweiten Anbindung ist der zweite Förderbereich mittels eines dritten Gelenks mit einem Zugmittelverbunden, das beispielsweise als ein(e) oder mehrere Abspannseil(e), Kette(n) oder Stange(n) ausgebildet sein kann. Die zweite Anbindung kann das dritte Gelenk bilden. Auch eine feste Ankopplung eines biegeschlaffen Zugmittels kann als Gelenk aufgefasst werden.

Um eine entsprechende Haltekraft zwischen der Fördereinrichtung und der Materialverarbeitungseinrichtung ausüben zu können, kann das Zugmittel ferner im Bereich einer Koppelstelle an der Materialverarbeitungseinrichtung angekoppelt sein. Denkbar ist, dass die Koppelstelle an einem Maschinenteil der Materialverarbeitungseinrichtung vorgesehen ist, beispielsweise an einem Gehäuse eines Aggregats der Materialverarbeitungseinrichtung. Es ist auch vorstellbar, dass die Koppelstelle an der Schwenkeinrichtung vorgesehen ist.

Da vorgesehen ist, dass der erste Förderbereich um eine erste Schwenkachse schwenkbar an der Materialverarbeitungseinrichtung angekoppelt ist, kann, insbesondere wenn weiter die zweite Anbindung an dem zweiten Förderbereich beabstandet zu der zweiten Schwenkachse vorgesehen ist, durch eine Verstellung des zweiten Förderbereichs in die Faltstellung vorteilhaft auch eine Reduktion des Anstellwinkels erreicht werden, den die Fördereinrichtung gegenüber der Horizontalen einnimmt. Durch ein Einschwenken des zweiten Förderbereichs kann somit nämlich eine Strecke zwischen der zweiten Anbindung und der Koppelstelle bei einem gedacht konstant gehaltenen Anstellwinkel verringert werden. Ein in einer bestimmten Länge vorliegendes Zugmittel wäre in dieser gedachten Situation nun gelockert bzw. entlastet. Dementsprechend kann sich die Fördereinrichtung nun, beispielsweise der Schwerkraft folgend, absenken. Wenn bei einem entsprechend verringerten Anstellwinkel der Abstand zwischen der zweiten Anbindung und der Koppelstelle im Wesentlichen wieder der Länge des Zugmittels entspricht, kann das Absenken beendet sein. In dieser Lage kann das Zugmittel wieder eine von der angebundenen Fördereinrichtung ausgeübte Last an die Materialverarbeitungseinrichtung übertragen. Mit anderen Worten kann die Fördereinrichtung bei einem Einklappen des zweiten Förderbereichs durch die Lage der zweiten Anbindung an dem zweiten Förderbereich gleichzeitig zumindest bereichsweise abgesenkt werden.

Somit lässt sich die Gesamthöhe in der eingeklappten Faltstellung des zweiten Förderbereichs weiter reduzieren. Folglich können in einem Arbeitsgang sowohl Gesamtlänge als auch Gesamthöhe der Fördereinrichtung bzw. der Materialverarbeitungseinrichtung verringert werden.

Gemäß einer vorteilhaften Ausgestaltung der Erfindung wird vorgeschlagen, dass der Aufnahmebereich im Bereich eines aufnahmeseitigen Endes des ersten Förderbereichs vorgesehen ist, dass der Abwurfbereich im Bereich eines abwurfseitigen Endes des zweiten Förderbereichs vorgesehen ist, und dass vorzugsweise die zweite Schwenkachse im Bereich eines dem aufnahmeseitigen Ende gegenüberliegenden übergabeseitigen Endes des ersten Förderbereichs und eines dem abwurfseitigen Ende gegenüberliegenden aufnahmeseitigen Endes des zweiten Förderbereichs vorgesehen ist.

Auf diese Weise kann die Schwenkbarkeit des zweiten Förderbereichs gegenüber dem ersten Förderbereich konstruktiv einfach erreicht werden. So ist beispielsweise vorstellbar, dass im Bereich des übergabeseitigen Endes des ersten Förderbereichs zumindest ein Schwenklager ausgebildet ist, mit dem das aufnahmeseitige Ende des zweiten Förderbereichs verbunden ist. Beispielsweise können erster Förderbereich und zweiter Förderbereich eine oder mehrere Lagerbohrungen aufweisen, die fluchtend zueinander ausgerichtet sein können und Lagerbolzen aufnehmen, um das Schwenklager auszubilden.

Eine besonders kompakte Transportkonfiguration, insbesondere in der Faltstellung, kann dadurch erreicht werden, dass die zweite Schwenkachse mit der ersten Schwenkachse einen Winkel von höchstens ± 5° einschließt, insbesondere parallel zu der ersten Schwenkachse ausgerichtet ist. Somit kann der zweite Förderbereich um die zweite Schwenkachse in Richtung auf den ersten Förderbereich zumindest teilweise eingeklappt werden.

Wenn weiter vorgesehen ist, dass die erste Schwenkachse mit der Horizontalen einen Winkel von höchstens ± 5° einschließt, insbesondere horizontal ausgerichtet ist, kann durch das Einschwenken des zweiten Förderbereichs in die Faltstellung eine Reduktion der Gesamthöhe der Fördereinrichtung und/oder der Materialverarbeitungseinrichtung effektiv erreicht werden.

Besonders bevorzugt kann die erste Schwenkachse mit der Förderrichtung einen Winkel zwischen 85° und 95° einschließen, insbesondere senkrecht zu der Förderrichtung ausgerichtet sein.

Erfindungsgemäß kann es auch vorgesehen sein, dass ein Abstand zwischen der zweiten Anbindung und der ersten Anbindung in der Faltstellung geringer ist als in der Förderstellung des zweiten Förderbereichs. In einer geometrischen Betrachtung können die Koppelstelle, die zweite Anbindung und die erste Anbindung als Dreieck angesehen werden, wobei durch das Zugmittel und den Bereich der Fördereinrichtung zwischen der ersten Anbindung und der zweiten Anbindung zwei gegenüberliegende Schenkel gebildet sind. Wenn nun der letztere Schenkel durch die Verringerung des Abstands verkürzt wird, wobei die Länge des ersteren Schenkels beibehalten wird, kann dies durch einen veränderten Winkel, insbesondere einen veränderten Anstellwinkel ausgeglichen werden. Vorzugsweise kann also vorgesehen sein, dass, zumindest teilweise bedingt durch den geringeren Abstand, der Anstellwinkel zwischen dem ersten Förderbereich und der Horizontalen in der Faltstellung geringer ist als in der Förderstellung des zweiten Förderbereichs.

Es kann erwünscht sein, dass in der Transportkonfiguration nicht nur eine zulässige Gesamthöhe einzuhalten ist, sondern darüber hinaus auch eine gewünschte Bodenfreiheit zu beachten ist, beispielsweise um die Fördereinrichtung und/oder die Materialverarbeitungseinrichtung oder Teile der Materialverarbeitungseinrichtung über eine Rampe verladen zu können. So kann es erstrebenswert sein, dass die Fördereinrichtung für den Transport insbesondere im Bereich ihres Aufnahmebereichs gegenüber der Betriebskonfiguration angehoben ist.

So wird gemäß einer bevorzugten Ausführungsform vorgeschlagen, dass die erste Anbindung in Förderrichtung beabstandet von dem aufnahmeseitigen Ende des ersten Förderbereichs vorgesehen ist. Somit kann bei einer Verringerung des Anstellwinkels das aufnahmeseitige Ende des ersten Förderbereichs ebenfalls um die erste Schwenkachse verschwenkt werden, wobei das aufnahmeseitige Ende jedoch auf einer der ersten Schwenkachse gegenüberliegenden Seite zu dem übergabeseitigen Ende und/oder dem Abwurfbereich liegt, und dadurch anstelle einer Absenkung eine Anhebung erfährt.

Eine erfindungsgemäße Materialverarbeitungseinrichtung kann dergestalt sein, dass der erste Förderbereich und der zweite Förderbereich je eine Oberseite und eine Unterseite und eine Mittenebene aufweisen, wobei die Mittenebenen je mittig zwischen Oberseite und Unterseite und parallel zu diesen verlaufen, und dass die zweite Schwenkachse und/oder die zweite Anbindung zumindest in der Förderstellung oberhalb der Mittenebenen, bevorzugt oberhalb der Oberseiten, vorgesehen ist/sind. Auf diese Weise können günstige Hebelverhältnisse der auf die Fördereinrichtung einwirkenden Kräfte, insbesondere einer von dem Zugmittel übertragenen Zugkraft, bezüglich der zweiten Schwenkachse erzielt werden. Weiterhin kann bei einer solchen Anordnung der zweite Förderbereich mit seiner Oberseite in der Transportstellung platzsparend gegenüberliegend der Oberseite des ersten Förderbereichs positioniert werden.

Gemäß einer vorteilhaften Weiterbildung der Erfindung wird vorgeschlagen, dass der zweite Förderbereich in der Förderstellung derart selbsthemmend an dem ersten Förderbereich angelenkt ist, dass eine selbsttätige Verstellung des zweiten Förderbereichs gegenüber dem ersten Förderbereich in Richtung auf die Faltstellung verhindert ist. Dementsprechend kann ein ungewolltes, insbesondere auch nur teilweises, Einschwenken des zweiten Förderbereichs vermieden werden. Beispielsweise ist es denkbar, dass eine Vorrichtung vorgesehen ist, die in einem normalen Betriebszustand eine Sicherung gegen ein Einklappen bietet, beispielsweise, dass zumindest ein Klappantrieb an der Fördereinrichtung vorgesehen ist, der eine Haltefunktion aufweist.

Es kann jedoch wünschenswert sein, dass ein ungewolltes Einklappen auch dann vermieden ist, wenn der Klappantrieb kraftlos, beispielsweise im Falle eines Versagens, vorliegt. Von einem unerwünschten und/oder unkontrollierten Einklappen könnte andernfalls eine Gefahr einer Beschädigung der Fördereinrichtung und/oder eine Verletzungsgefahr für Personen ausgehen.

Ferner kann mittels der Selbsthemmung eine Energieeinsparung erreichbar sein. So müsste, wenn keine Selbsthemmung vorläge, die ausgeklappte Förderstellung gegebenenfalls unter Energieaufwand von einem Klappantrieb gehalten werden.

Die Selbsthemmung kann insbesondere dadurch erreicht oder zumindest unterstützt werden, dass der erste Förderbereich einen ersten Massenschwerpunkt aufweist, in dem eine erste Gewichtskraft angreift, dass der zweite Förderbereich einen zweiten Massenschwerpunkt aufweist, in dem eine zweite Gewichtskraft angreift, dass das Zugmittel auf die zweite Anbindung eine Zugkraft ausübt, deren Moment bezüglich der ersten Schwenkachse mit der Summe der Momente der ersten und der zweiten Gewichtskraft im Gleichgewicht steht, dass, zumindest wenn sich der zweite Förderbereich im ausgeklappten Zustand befindet, die Summe der Momente der zweiten Gewichtskraft und der Zugkraft bezüglich der zweiten Schwenkachse gleich Null ist oder einen positiven Betrag aufweist und in Richtung eines Schwenkens des zweiten Förderbereichs in die Förderstellung gerichtet ist.

Zusätzlich oder alternativ kann eine Selbsthemmung selbstverständlich auch mit anderen Mitteln erreicht und/oder unterstützt werden. So ist es denkbar, dass Reibungskräfte und/oder -momente in Lagerstellen, beispielsweise in einem Klappmechanismus, der das Verschwenken um die zweite Schwenkachse ermöglicht, insbesondere in einem Schwenklager, eine Selbsthemmung verursachen oder unterstützen. Ebenfalls ist vorstellbar, dass der zweite Förderbereich in der Förderstellung gegenüber dem ersten Förderbereich überstreckt vorgesehen sein kann. In einer solchen überstreckten Lage kann die zweite Anbindung gegenüber der zweiten Schwenkachse und/oder die Ausrichtung des Zugmittels derart ausgebildet sein, dass das von der Zugkraft bezüglich der zweiten Schwenkachse ein Moment ausgeübt wird, das in Richtung auf die Förderstellung wirkt.

Es kann weiter erwünscht sein, dass sich die Selbsthemmung zumindest bei einer unbeladenen Fördereinrichtung einstellt. Bevorzugt kann jedoch vorgesehen sein, dass die Selbsthemmung auch in dem Fall eintritt, wenn die Fördereinrichtung, beispielsweise mit bearbeitetem oder zu bearbeitendem Material, beladen ist, in dem also die erste Gewichtskraft aus der Masse des ersten Förderbereichs und vorzugsweise der Masse auf diesem befindlichen Materials resultiert, die Lage des ersten Massenschwerpunkts aus der räumlichen Verteilung der Masse des ersten Förderbereichs und vorzugsweise der Masse auf diesem befindlichen Materials resultiert, und/oder die zweite Gewichtskraft aus der Masse des zweiten Förderbereichs und vorzugsweise der Masse auf diesem befindlichen Materials resultiert, und die Lage des zweiten Massenschwerpunkts aus der räumlichen Verteilung der Masse des zweiten Förderbereichs und vorzugsweise der Masse auf diesem befindlichen Materials resultiert.

Die Selbsthemmung kann insbesondere dadurch erreicht oder unterstützt werden, dass die Lage der ersten Schwenkachse und/oder der zweiten Schwenkachse und/oder des ersten Massenschwerpunkts und/oder des zweiten Massenschwerpunkts und/oder der zweiten Anbindung und/oder der Koppelstelle und/oder der Betrag der ersten Gewichtskraft und/oder der zweiten Gewichtskraft entsprechend gewählt sind.

Vorzugsweise kann hierbei die Lage der zweiten Anbindung in der Transportrichtung des zweiten Förderbereichs in einem Bereich angeordnet sein, der der zweiten Schwenkachse zugewandt ist und nicht weiter als 30 % der Erstreckung des zweiten Förderbereichs in seiner Transportrichtung von der zweiten Schwenkachse beabstandet ist, weiter bevorzugt nicht weiter als 15 %, besonders bevorzugt nicht weiter als 10 %, insbesondere nicht weiter als 5 %. Somit kann ein Hebelarm der Zugkraft bezüglich der zweiten Schwenkachse auf ein Maß eingestellt werden, das die Selbsthemmung zumindest nicht verhindert.

Darüber hinaus kann durch eine derart geringe Beabstandung der zweiten Anbindung von der zweiten Schwenkachse erreicht werden, dass der Anstellwinkel bei einem Einklappen des zweiten Förderbereichs in die Faltstellung nicht über ein gewünschtes Maß hinaus verringert wird.

Gemäß einer vorteilhaften Weiterbildung der Erfindung wird vorgeschlagen, dass die Fördereinrichtung einen Klappmechanismus mit zumindest einem Klappantrieb aufweist, dass der Klappantrieb eine Verstellung des zweiten Förderbereichs zwischen der Faltstellung und der Förderstellung bewirkt oder zumindest unterstützt, wobei der Klappantrieb ein Stellelement, insbesondere einen Hydraulikzylinder, besonders bevorzugt einen doppeltwirkenden Hydraulikzylinder, und ein gegenüber dem Stellelement verstellbares Übertragungselement, vorzugsweise eine Kolbenstange, aufweist.

Der Klappantrieb kann beispielsweise mit einer Steuerungseinrichtung verbunden und über diese ansteuerbar sein. Der Klappantrieb kann eine komfortable und sichere Verstellung des zweiten Förderbereichs zwischen der eingeklappten Faltstellung und der ausgeklappten Förderstellung ermöglichen. Insbesondere, wenn vorgesehen ist, dass der zweite Förderbereich in der Förderstellung selbsthemmend gehalten ist, kann mittels des Klappantriebs eine erforderliche Kraft bzw. ein erforderliches Moment aufgebracht werden, um den zweiten Förderbereich in die Faltstellung zu überführen.

Eine konstruktiv einfache und zuverlässige Kraftübertragung zwischen dem ersten Förderbereich, dem Klappantrieb und dem zweiten Förderbereich lässt sich insbesondere erreichen, wenn vorgesehen ist, dass das Stellelement an den ersten Förderbereich angekoppelt ist, und dass ein Hebelelement vorgesehen ist, das einerseits mittels eines ersten Schwenklagers schwenkbar an das Übertragungselement angekoppelt ist, und das andererseits mittels eines zweiten Schwenklagers beabstandet von der zweiten Schwenkachse schwenkbar an den zweiten Förderbereich angekoppelt ist.

Wenn ein Führungselement vorgesehen ist, das einerseits mittels eines dritten Schwenklagers schwenkbar an dem ersten Förderbereich angekoppelt ist, und das andererseits mittels eines vierten Schwenklagers schwenkbar an dem Übertragungselement, vorzugsweise an dem Hebelelement angekoppelt ist, und dass während eines Schwenkens des zweiten Förderbereichs um die zweite Schwenkachse das Hebelelement mittels des Führungselements an dem ersten Förderbereich geführt ist, kann der Bewegungsablauf des Klappmechanismus während der Verstellung des zweiten Förderbereichs sicher geführt werden. Insbesondere können Kräfte, die quer zu einer Verstellrichtung des Übertragungselements bezüglich des Stellelements wirken, zumindest teilweise von dem Führungselement aufgenommen werden. Hierdurch kann eine Beschädigung und/oder ein übermäßiger Verschleiß des Klappantriebs verhindert werden, insbesondere wenn das Stellelement als Hydraulikzylinder und das Übertragungselement als Kolbenstange ausgeführt sind.

Vorzugsweise kann das Hebelelement im Bereich des vierten Schwenklagers auf einer Kreisbahn geführt sein.

Gemäß einer vorteilhaften Weiterbildung der Erfindung wird vorgeschlagen, dass der/ein Klappantrieb zumindest in der Förderstellung unterhalb von/der Mittenebenen der Förderbereiche, bevorzugt unterhalb von/der Unterseiten der Förderbereiche, vorgesehen ist. Auf diese Weise können sich günstige Hebelverhältnisse der von dem Klappantrieb zur Verstellung des zweiten Förderbereichs aufgebrachten Kräfte bezüglich der zweiten Schwenkachse ergeben.

Wie dies bereits ausgeführt wurde, kann es erwünscht sein, dass die Fördereinrichtung in ihrer Gesamtlänge und/oder Gesamthöhe für den Transport reduziert werden kann und/oder eine gewünschte Bodenfreiheit für den Transport eingehalten werden kann.

Darüber hinaus kann es jedoch auch gewünscht sein, dass die Fördereinrichtung in ihrer Positionierung, beispielsweise der Ausrichtung ihrer Längserstreckung bezüglich der Materialverarbeitungseinrichtung verändert wird, um eine kompakte Konfiguration für den Transport zu erreichen. Dies lässt sich auf einfache Weise erreichen, wenn die Fördereinrichtung um eine dritte Schwenkachse zwischen einer Betriebsposition und einer Transportposition schwenkbar an der Materialverarbeitungseinrichtung gelagert ist, wobei die dritte Schwenkachse quer zu der erste Schwenkachsen verläuft, vorzugsweise mit der ersten Schwenkachse einen Winkel zwischen 85° und 95° einschließt, insbesondere senkrecht zu der ersten Schwenkachse ausgerichtet ist, wobei insbesondere die dritte Schwenkachse mit der Vertikalen einen Winkel von höchstens ± 5° einschließt, besonders bevorzugt vertikal ausgerichtet ist. Vorzugsweise kann die Fördereinrichtung in der Transportposition gegenüber der Betriebsposition um die dritte Schwenkachse um mindestens 170°, besonders bevorzugt um 180° verschwenkt sein.

Auf diese Weise lässt sich eine besonders kompakte Transportkonfiguration der Fördereinrichtung und/oder der Materialverarbeitungseinrichtung erreichen.

Ein Verschwenken der Fördereinrichtung um die dritte Schwenkachse kann vorzugsweise von einem Schwenkantrieb bewirkt und/oder unterstützt werden. Der Schwenkantrieb kann beispielsweise mit einer Steuerungseinrichtung verbunden und über diese ansteuerbar sein.

Gemäß einer bevorzugten Ausführungsform der Erfindung wird vorgeschlagen, dass der Aufnahmebereich in der Betriebsposition im Bereich einer Übergabeeinheit eines ersten Aggregats der Materialverarbeitungseinrichtung, insbesondere im Bereich eines Stichbands einer Siebeinheit, zur Aufnahme zu fördernden Materials von dem ersten Aggregat angeordnet ist, und dass der Abwurfbereich in der Betriebsposition im Bereich einer Aufgabeeinheit eines weiteren Aggregats der Materialverarbeitungseinrichtung oder eines Aggregats einer weiteren Materialverarbeitungseinrichtung, insbesondere im Bereich eines Aufgabetrichters eines Brechaggregats, angeordnet ist, zur Übergabe des aufgenommenen Materials an das weitere Aggregat, wobei die Fördereinrichtung in der Transportposition gegenüber der Betriebsposition um die dritte Schwenkachse vorzugsweise um mindestens 170°, besonders bevorzugt um 180° verschwenkt ist.

Die das Verfahren betreffende Aufgabe wird durch die Merkmale des Anspruchs 17 gelöst.

Die die Materialverarbeitungseinrichtung betreffende Aufgabe wird auch gelöst durch eine Materialverarbeitungseinrichtung, insbesondere eine mobile Materialverarbeitungseinrichtung, mit einer Fördereinrichtung, insbesondere einem Förderband, zur Förderung von verarbeitetem und/oder zu verarbeitendem Material in einer Förderrichtung zwischen einem Aufnahmebereich und einem Abwurfbereich der Fördereinrichtung, wobei die Fördereinrichtung einen ersten und einen zweiten Förderbereich aufweist, wobei der erste Förderbereich im Bereich einer ersten Anbindung um eine erste Schwenkachse schwenkbar an der Materialverarbeitungseinrichtung angekoppelt ist, wobei ein Zugmittel vorgesehen ist, das einerseits im Bereich einer Koppelstelle an die Materialverarbeitungseinrichtung, und andererseits im Bereich einer zweiten Anbindung beabstandet zu der ersten Anbindung an die Fördereinrichtung angekoppelt ist, wobei der zweite Förderbereich gegenüber dem ersten Förderbereich um eine zweite Schwenkachse zwischen einer eingeklappten Faltstellung und einer ausgeklappten Förderstellung schwenkbar gelagert ist, wobei die erste Anbindung an dem ersten Förderbereich vorgesehen ist, und wobei die zweite Anbindung an dem zweiten Förderbereich beabstandet zu der zweiten Schwenkachse vorgesehen ist. Insbesondere kann eine solche Materialverarbeitungseinrichtung Merkmale eines, mehrerer oder aller Unteransprüche des Anspruchs 1 aufweisen. Auch wird die das Verfahren betreffende Aufgabe durch ein Verfahren nach Anspruch 17 mit einer solchen Materialverarbeitungseinrichtung gelöst.

Die Erfindung wird im Folgenden anhand eines in den Zeichnungen dargestellten Ausführungsbeispiels näher erläutert. Es zeigen:
- Figur 1: in schematischer Darstellung eine Materialverarbeitungseinrichtung 1 mit einer Fördereinrichtung 10 in einer Betriebskonfiguration in perspektivischer Ansicht,
- Figur 2: in schematischer Darstellung die Materialverarbeitungseinrichtung 1 mit der Fördereinrichtung 10 in einer Betriebsposition in Seitenansicht,
- Figur 3: in schematischer Darstellung die Materialverarbeitungseinrichtung 1 mit der Fördereinrichtung 10 in einer Transportposition in Seitenansicht,
- Figur 4: in schematischer Darstellung eine Fördereinrichtung 10 in einer ausgeklappten Förderstellung in Seitenansicht,
- Figur 5: einen in Figur 4 markierten Bereich in einer Detailansicht,
- Figur 6: eine schematische Darstellung einer Fördereinrichtung 10 in einer eingeklappten Faltstellung in Seitenansicht,
- Figur 7: eine schematische Darstellung der Kräfteverhältnisse an einer Fördereinrichtung 10,
- Figur 8: eine schematische Seitenansicht einer Materialverarbeitungseinrichtung 1 mit einer Fördereinrichtung 10 in einer Transportkonfiguration.

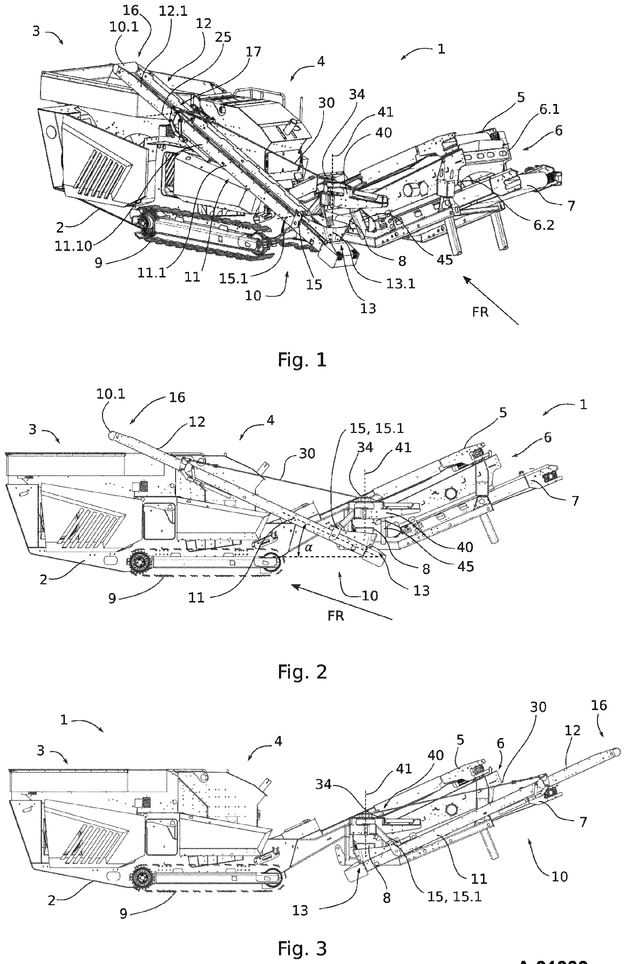

Figur 1 zeigt eine Materialverarbeitungseinrichtung 1 in Form einer Brechanlage mit einem Materialverarbeitungsaggregat in Form eines Brechaggregats 4. Die Materialverarbeitungseinrichtung ist als mobile Materialverarbeitungseinrichtung ausgebildet und weist daher Fahrwerke 9 auf. Denkbar ist es jedoch auch, dass es sich bei der Materialverarbeitungseinrichtung 1 um eine stationäre Materialverarbeitungseinrichtung 1 handelt.

Die Materialverarbeitungseinrichtung 1 weist ein Chassis 2 auf, welches die Maschinenkomponenten oder zumindest einen Teil der Maschinenkomponenten trägt. An einem rückwärtigen Ende der Materialverarbeitungseinrichtung 1 ist eine Aufgabeeinheit 3 gebildet. Die Aufgabeeinheit 3 kann einen Aufgabetrichter umfassen.

Der Aufgabetrichter kann zumindest teilweise von Trichterwänden, die in Richtung der Längserstreckung der Materialverarbeitungseinrichtung 1 verlaufen und einer quer zur Längserstreckung verlaufenden Rückwand gebildet sein.

Über die Aufgabeeinheit 3 kann, beispielsweise mittels eines Radladers, zu zerkleinerndes Gut in die Materialverarbeitungseinrichtung 1 eingefüllt und beispielsweise mittels einer Förderrinne dem Brechaggregat 4 zugeführt werden.

Das Brechaggregat 4 kann beispielsweise in Form eines Rotationsprall-Brechaggregats, eines Backenbrechers oder eines Kegelbrechers ausgebildet sein.

Das zerkleinerte Material kann das Brechaggregat 4 durch einen Brecherauslass verlassen und beispielsweise mittels eines Brecherabzugsbands 5 aus dem Arbeitsbereich des Brechaggregats 4 herausgeführt werden.

Wie in Figur 1 weiter zu erkennen ist, kann das Brecherabzugsband 5 als endlos umlaufendes Förderband ausgestaltet sein. An den Bandenden kann das Brecherabzugsband 5 beispielsweise mittels Umlenkrollen umgelenkt werden. Im Bereich zwischen den Umlenkrollen können Führungen, insbesondere Tragrollen vorgesehen sein, um die Förderrichtung des Förderbands zu verändern, dem Förderband eine bestimmte Form zu geben und/oder das Förderband zu stützen.

In Materialflussrichtung nach dem Brecherabzugsband 5 kann eine Siebeinheit 6 angeordnet sein. Die Siebeinheit 6 kann ein Siebgehäuse 6.1 aufweisen, in dem wenigstens ein Siebdeck untergebracht ist. Unterhalb des Siebdecks kann ein Gehäuseunterteil 6.2 gebildet sein, welcher als Sammelraum dient für das am Siebdeck 6.1 ausgesiebte Material.

Das Gehäuseunterteil 6.1 schafft über eine Öffnung eine räumliche Verbindung zu einem weiteren Feinkornband 7. Das Feinkornband 7 fördert das ausgesiebte Material hin zu seinem Abwurfende. Von dort gelangt das ausgesiebte Material beispielsweise auf eine Halde.

Das am Siebdeck der Siebeinheit 6 nicht ausgesiebte Material wird vom Siebdeck auf eine Übergabeeinheit 8, vorliegend auf ein Stichband, gefördert. Die Transportrichtung der Übergabeeinheit 8 verläuft in Figur 1 aus der Bildebene hinaus.

An seinem Abwurfende kann die Übergabeeinheit 8 das nicht ausgesiebte Material, das auch als Überkorn bezeichnet wird, auf einen Aufnahmebereich 13 einer Fördereinrichtung 10 geben.

In Figur 2 ist eine schematische Seitenansicht der Materialverarbeitungseinrichtung 1 zu sehen.

Eine Position der Fördereinrichtung 10, wie sie in den Figuren 1 und 2 dargestellt ist, kann einer Betriebsposition der Fördereinrichtung 10 entsprechen. Die Betriebsposition kann dergestalt sein, dass der Aufnahmebereich 13 der Fördereinrichtung 10 im Bereich der Übergabeeinheit 8 der Siebeinheit 6, vorliegend des Stichbands der Siebeinheit 6, angeordnet ist. Die Fördereinrichtung 10 kann im Aufnahmebereich 13 einen Aufnahmetrichter 13.1 aufweisen, in den das von der Übergabeeinheit 8 übergebene Material eingefüllt werden kann.

Die Fördereinrichtung 10 kann als Bandförderer ausgeführt sein und ein endlos umlaufendes Förderband aufweisen, das an seiner Oberseite einen Lasttrum und an seiner Unterseite einen Leertrum (nicht dargestellt) aufweist. Der Lasttrum kann dazu dienen, das aufgegebene Material, welches im Aufnahmebereich 13 der Fördereinrichtung 10 zugeführt wird, aufzufangen und in einer Förderrichtung FR zu einem Abwurfbereich 16 abzutransportieren.

An den Bandenden kann das Förderband zwischen dem Lasttrum und dem Leertrum mittels Umlenkrollen 10.1 umgelenkt werden. Im Bereich zwischen den Umlenkrollen können Führungen, insbesondere Tragrollen vorgesehen sein, um die Förderrichtung des Förderbands zu verändern, dem Förderband eine bestimmte Form zu geben und/oder das Förderband zu stützen (nicht dargestellt).

Die Fördereinrichtung 10 kann ferner einen Antrieb 14 aufweisen, mittels dessen die Fördereinrichtung 10 angetrieben werden kann. Der Antrieb 14 kann vorzugsweise anschließend an den Aufnahmebereich 13 der Fördereinrichtung 10 vorgesehen sein. Die Fördereinrichtung 10 kann, beispielsweise mittels des Antriebs 14, an eine Steuereinrichtung mittels einer Steuerleitung angeschlossen sein.

Wie den Figuren 1 und 2 weiter zu entnehmen ist, kann die Fördereinrichtung 10 in der Betriebsposition mit ihrem Abwurfbereich 16 in einem Bereich der Aufgabeeinheit 3 eines Aggregats der Materialverarbeitungseinrichtung 1, vorliegend im Bereich des Aufgabetrichters des Brechaggregats 4 angeordnet sein. Dementsprechend kann Material, das im Aufnahmebereich 13 auf die Fördereinrichtung 10 aufgegeben wurde, der Aufgabeeinheit 3 zugeführt werden.

Beispielsweise um Höhenunterschiede zwischen der Übergabeeinheit 8 und der Aufgabeeinheit 3 auszugleichen, kann die Fördereinrichtung 10 um einen Anstellwinkel α gegenüber der Horizontalen geneigt sein. Um eine Verstellung des Anstellwinkel α zu ermöglichen, kann die Fördereinrichtung 10 im Bereich einer ersten Anbindung 15 um eine erste Schwenkachse 15.1 schwenkbar an der Materialverarbeitungseinrichtung 1 gelagert sein.

Wie der Figur 1 weiter zu entnehmen ist, kann die Fördereinrichtung 10 einen ersten Förderbereich 11 und einen zweiten Förderbereich 12 aufweisen. Der zweite Förderbereich 12 kann um eine zweite Schwenkachse 25 gegenüber dem ersten Förderbereich 11 schwenkbar gelagert sein. Auf den Aufbau und die Funktion dieser Schwenkverbindung wird an späterer Stelle näher eingegangen.

Ferner kann ein Zugmittel 30, insbesondere ein oder mehrere Abspannseil(e), vorgesehen sein. Das Zugmittel 30 kann mit einem ersten Endbereich 31 im Bereich einer Koppelstelle 34 an der Materialverarbeitungseinrichtung 1 angekoppelt sein. Mit einem gegenüberliegenden zweiten Endbereich 32 kann das Zugmittel 30 an eine zweite Anbindung 17 an der Fördereinrichtung 10 angekoppelt sein. Das Zugmittel 30 kann somit eine Zugkraft zwischen der Fördereinrichtung 10 und der Materialverarbeitungseinrichtung 1 ausüben, die die Fördereinrichtung 10 in einem gewünschten Anstellwinkel α halten kann.

Der Anstellwinkel α kann beispielsweise durch die Wahl einer Länge des Zugmittels 30 eingestellt werden. Alternativ oder zusätzlich kann, wie vorliegend dargestellt, ein Einstellmittel 33 an dem Zugmittel 30 vorgesehen sein, mittels dessen die Länge des Zugmittels 30 verstellbar ist. Hierzu kann beispielsweise ein Spannschloss vorgesehen sein. Wie vorliegend kann das Zugmittel 30 ein Abspannseil aufwiesen, an das im zweiten Endbereich 32 zwei Spannschlösser Y-förmig abzweigend angeschlossen sind. Die Spannschlösser können im Bereich der zweiten Anbindung 17 an die Fördereinrichtung 10 angekoppelt sein. Wie in Figur 1 zu sehen ist, kann die zweite Anbindung 17 zwei Anbindungspunkte aufweisen, die quer zur Förderrichtung FR gegenüberliegend an der Fördereinrichtung 10 vorgesehen sein können.

In Figur 3 ist eine Transportposition der Fördereinrichtung 10 dargestellt. Gegenüber der Betriebsposition kann die Fördereinrichtung 10 demnach in der Transportposition um eine dritte Schwenkachse 41 verschwenkt vorliegen. Die dritte Schwenkachse 41 kann vorzugsweise im Bereich des Aufnahmebereichs 13 der Fördereinrichtung 10 vorgesehen sein. Für die Verstellung der Fördereinrichtung 10 zwischen der Betriebsposition und der Transportposition kann eine Schwenkeinrichtung 40 vorgesehen sein. Auf eine mögliche Ausgestaltung der Schwenkeinrichtung 40 wird später näher eingegangen.

Die dritte Schwenkachse 41 kann vorzugsweise eine vertikale Achse sein. Vorzugsweise kann die Fördereinrichtung 10 um die dritte Schwenkachse 41 zwischen der Betriebsposition und der Transportposition um 180° verschwenkt werden, wie dies an dem in den Figuren gezeigten Ausführungsbeispiel deutlich wird. In dem gezeigten Ausführungsbeispiel befindet sich in der Transportposition, im Gegensatz zu der Betriebsposition, der Abwurfbereich 16 nunmehr nicht mehr im Bereich der Aufgabeeinheit 3. Die Fördereinrichtung 10 ist dementsprechend in der Transportposition nicht mehr zu dem Brechaggregat 4 hin, sondern für einen Transport vorteilhaft entlang der Siebeinheit 6 ausgerichtet.

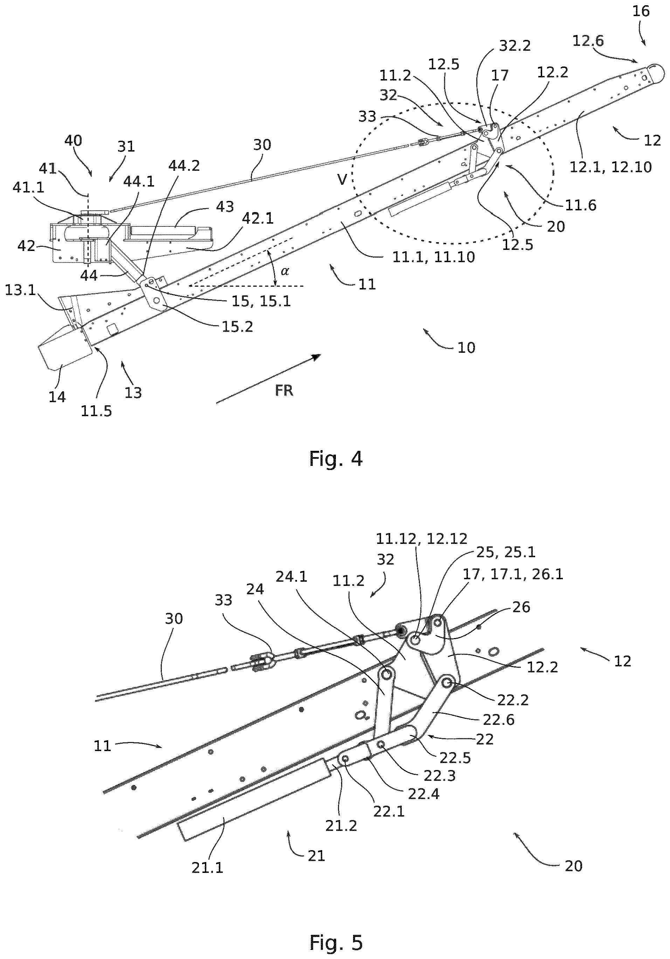

In Figur 4 sind die Fördereinrichtung 10, die Schwenkeinrichtung 40 und das Zugmittel 30 in einer schematischen Seitenansicht näher zu erkennen. Die Schwenkeinrichtung 40 kann ein Basisteil 42 aufweisen, an das sich ein Armabschnitt 42.1 anschließen kann. Mittels eines Trägers 45 kann die Schwenkeinrichtung 40 an der Materialverarbeitungseinrichtung 1 befestigt sein, beispielsweise an dem Chassis 2 im Bereich der Siebeinheit 6 (s. Fig. 1). Die Schwenkeinrichtung 40 kann ferner ein Schwenklager 41.1 aufweisen, das eine Drehung um die dritte Schwenkachse 41 erlaubt.

Mittels des Schwenklagers 41.1 kann ein Ausleger 44 mit einem ersten Endbereich 44.1 an der Schwenkeinrichtung 40 gelagert sein. An einem gegenüberliegenden zweiten Endbereich 44.2 des Auslegers 44 kann die erste Anbindung 15 zur Ankopplung der Fördereinrichtung 10 vorgesehen sein. Wie in Figur 1 zu sehen ist, kann der zweite Endbereich 44.2 als quer zur Förderrichtung FR der Fördereinrichtung 10 ausgerichteter Träger ausgestaltet sein. Hierbei kann sich der zweite Endbereich 44.2 zwischen zwei Seitenwänden 11.10 eines ersten Bandgerüsts 11.1 des ersten Förderbereichs 11 erstrecken.

An den Seitenwänden 11.10 des ersten Bandgerüsts 11.1 können Befestigungselemente 15.2, insbesondere quer zu der Förderrichtung FR beiderseits des ersten Bandgerüsts 11.1, vorgesehen sein, die beispielsweise plattenförmig ausgestaltet sein können. Die Befestigungselemente 15.2 können mit dem zweiten Endbereich 44.2 des Auslegers 44 ein Schwenklager bilden, das eine Drehung um die erste Schwenkachse 15.1 erlaubt. Beispielsweise können der zweite Endbereich 44.2 und/oder Befestigungselemente 15.2 Aufnahmen aufweisen, durch die ein Lagerbolzen geführt werden kann.

Die Fördereinrichtung 10 kann somit mittels des Auslegers 44 an dem Schwenklager 41.1 der Schwenkeinrichtung 40 um die dritte Schwenkachse 41 schwenkbar gelagert sein.

Die Schwenkeinrichtung 40 kann ferner einen Schwenkantrieb 43 aufweisen. Dieser kann, wie vorliegend dargestellt, an einem Armabschnitt 42.1 vorgesehen sein. Beispielsweise kann es sich bei dem Schwenkantrieb 43 um einen hydraulischen Schwenkantrieb 43 mit einem, vorzugsweise doppeltwirkenden, Hydraulikzylinder und einer demgegenüber verstellbaren Kolbenstange handeln. Eine Verstellung des Schwenkantriebs 43 kann auf geeignete Weise, beispielsweise über eine Verzahnung oder einen angelenkten Hebel, in ein Schwenken des Auslegers 44 um die dritte Schwenkachse 41 umgesetzt werden.

An der Schwenkeinrichtung 40 kann auch die Koppelstelle 34 zur Ankopplung des Zugmittels 30 an die Materialverarbeitungseinrichtung 1 vorgesehen sein. Vorzugsweise kann das Zugmittel 30 mit seinem ersten Endbereich 31 drehbar an die Materialverarbeitungseinrichtung 1 gekoppelt, insbesondere wie vorliegend an der Schwenkeinrichtung 40 gelagert sein. Die Koppelstelle 34 kann im Bereich der dritten Schwenkachse 41 vorgesehen sein, und besonders bevorzugt eine Schwenkbarkeit des Zugmittels 30 um die dritte Schwenkachse 41 bewirken, die vorzugsweise vertikal verläuft, wie Fig. 4 zeigt.

Wie der Figur 4 weiter zu entnehmen ist, kann die erste Anbindung 15 im Bereich des Aufnahmebereichs 13 der Fördereinrichtung 10 vorgesehen sein. Insbesondere kann die erste Anbindung 15 näher an einem aufnahmeseitigen Ende 11.5 des ersten Förderbereichs 11 vorgesehen sein als an einem übergabeseitigen Ende 11.6.

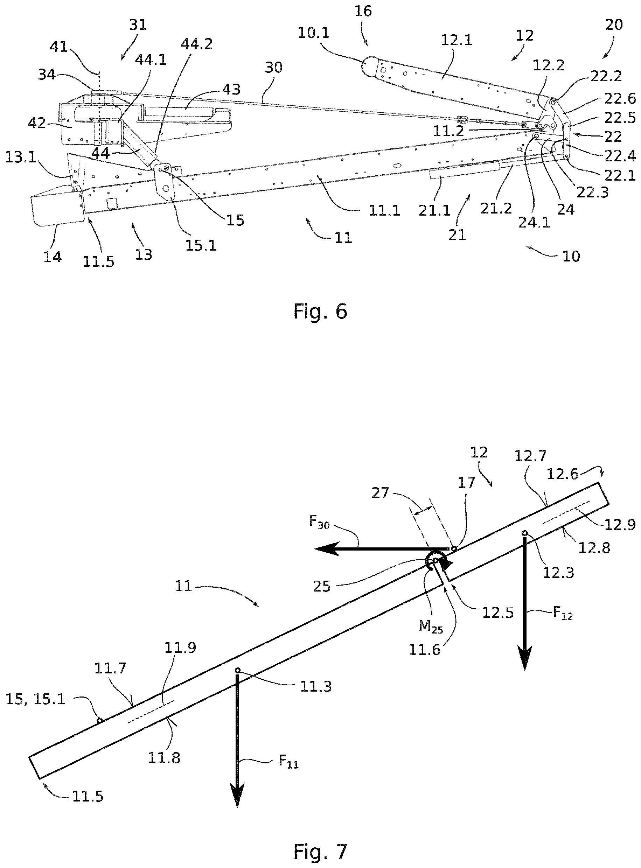

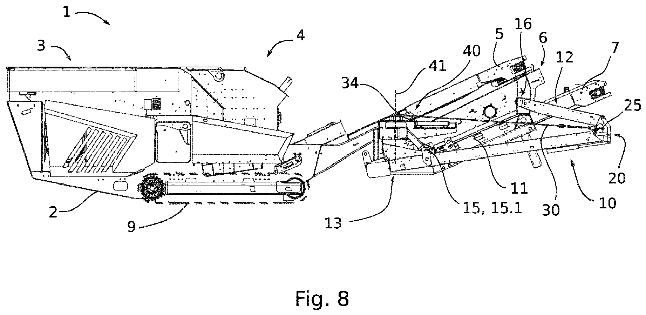

Im Bereich des übergabeseitigen Endes 11.6 des ersten Förderbereichs 11 und eines aufnahmeseitigen Endes 12.5 des zweiten Förderbereichs 12 kann die zweite Schwenkachse 25 vorgesehen sein. Um die zweite Schwenkachse 25 kann der zweite Förderbereich 12 gegenüber dem ersten Förderbereich 11 zwischen einer ausgeklappten Förderstellung, wie sie in den Figuren 1 bis 5 zu sehen ist, und einer eingeklappten Faltstellung, wie sie in den Figuren 6 und 8 zu sehen ist, schwenkbar gelagert sein. Mit anderen Worten kann zwischen dem ersten Förderbereich 11 und dem zweiten Förderbereich 12 im Bereich des übergabeseitigen Endes 11.6 des ersten Förderbereichs 11 und des aufnahmeseitigen Endes 12.5 des zweiten Förderbereichs 12 ein Schwenklager gebildet sein.

Hierzu können an Seitenwänden 11.10, 12.10 der Bandgerüste 11.1, 12.1 des ersten und zweiten Förderbereichs 11, 12 jeweils Verstärkungselemente 11.2, 12.2 vorgesehen sein. Vorzugsweise können die Verstärkungselemente 11.2, 12.2 quer zur Förderrichtung FR beiderseits der Bandgerüste 11.1, 12.1 vorgesehen sein. Die Verstärkungselemente 11.2, 12.2 können jeweils Lageraufnahmen 11.12, 12.12 aufweisen, die zueinander ausgerichtet sind. Durch die Lageraufnahmen 11.12, 12.12 können beispielsweise Lagerbolzen 25.1 geführt sein, um das Schwenklager zu bilden.

Wie anhand der Figur 4 weiter zu erkennen ist, kann beabstandet zu der zweiten Schwenkachse 25 an dem zweiten Förderbereich 12 die zweite Anbindung 17 vorgesehen sein. Bevorzugt kann die zweite Anbindung 17 entlang der Förderrichtung FR von der zweite Schwenkachse 25 beabstandet angeordnet sein.

Der zweite Förderbereich 12 kann beispielsweise an zumindest einem zweiten Verstärkungselement 12.2 eine Lageraufnahme 26.1, beispielsweise in Form einer Bohrung, aufweisen. Das Zugmittel 30 kann in seinem zweiten Endbereich 32 zumindest einen Halteabschnitt 32.2 aufweisen, der eine beispielsweise korrespondierend ausgebildete Lageraufnahme aufweist. Durch die Lageraufnahmen kann ein Lagerbolzen 17.1 führbar sein, um den zweiten Endbereich 32 mit der zweiten Anbindung 17, vorzugsweise schwenkbar, zu koppeln. Vorzugsweise kann im Bereich der der zweiten Schwenkachse 25 zugeordneten Lageraufnahme 12.12 und der der zweiten Anbindung 17 zugeordneten Lageraufnahme 26.1 ein Verbindungselement 26 als Verstärkung des zweiten Verstärkungselements 12.2 vorgesehen sein. Hierbei kann es sich um ein plattenförmiges Element handeln, das beispielsweise mittels einer Schweißung an dem zweiten Verstärkungselement 12.2 befestigt ist.

Aus Figur 4 geht weiter hervor, dass im Bereich der zweiten Schwenkachse 25 ein Klappmechanismus 20 vorgesehen sein kann. In Figur 5 ist eine mögliche Ausgestaltung des Klappmechanismus 20 anhand des in Figur 4 markierten Details näher zu erkennen. Dementsprechend kann der Klappmechanismus 20 zumindest einen Klappantrieb 21 aufweisen. Der Klappantrieb 21 kann ein Stellelement 21.1 und ein gegenüber diesem verstellbares Übertragungselement 21.2 aufweisen. Vorzugsweise ist das Stellelement 21.1 als Hydraulikzylinder, insbesondere als doppeltwirkender Hydraulikzylinder, ausgestaltet. In diesem Fall kann das Übertragungselement 21.2 eine an einen Kolben des Hydraulikzylinders angekoppelte Kolbenstange sein.

Der Klappantrieb 21 kann an dem ersten Förderbereich 11, insbesondere an dem ersten Bandgerüst 11.1, befestigt sein. Vorzugsweise ist der Klappantrieb 21, beispielsweise mit seinem Stellelement 21.1, im Wesentlichen starr mit dem ersten Förderbereich 11 verbunden. Es ist jedoch auch vorstellbar, eine schwenkbare Verbindung, beispielsweise eines dem Übertragungselement 21.2 abgewandten Endbereichs des Stellelements 21.1, mit dem ersten Förderbereich 11 vorzusehen.

An das Übertragungselement 21.2 kann mittels eines ersten Schwenklagers 22.1 ein Hebelelement 22 schwenkbar angekoppelt sein. Das Hebelelement 22 kann in einem dem ersten Schwenklager 22.1 gegenüberliegenden Endbereich an dem zweiten Förderbereich 12 mittels eines zweiten Schwenklagers 22.2 schwenkbar angekoppelt sein. Das zweite Schwenklager 22.2 kann förderbereichseitig an dem zweiten Verstärkungselement 12.2 vorgesehen sein. Vorzugsweise liegt das zweite Schwenklager 22.2 beabstandet zu der zweiten Schwenkachse 25 vor, damit ein Hebelarm geschaffen ist, um eine Kraft des Klappantriebs 21 in ein Verschwenken des zweiten Förderbereichs 12 um die zweite Schwenkachse 25 umsetzen zu können.

Das Hebelelement 22 kann ein erstes Segment 22.4 und ein zweites Segment 22.6 aufweisen, die mittels einer Verbindung 22.5 miteinander verbunden sind. Denkbar ist, dass die Segmente 22.4, 22.6 schwenkbar miteinander verbunden sind. Bevorzugt sind die Segmente 22.4, 22.6 jedoch, wie gemäß dem gezeigten Ausführungsbeispiel, im Wesentlichen starr miteinander verbunden.

Der Klappmechanismus 20 kann somit eine Verstellung des Stellelements 21.1 gegenüber dem Stellelement 21.1 des Klappantriebs 21 mittels des Hebelelements 22 in ein Verschwenken des zweiten Förderbereichs 12 gegenüber dem ersten Förderbereich 11 um die zweite Schwenkachse 25 bewirken.

Wie der Figur 5 weiter zu entnehmen ist, kann der Klappmechanismus 20 ferner ein Führungselement 24, beispielsweise in Form eines Hebels, aufweisen. Das Führungselement 24 kann mittels eines dritten Schwenklagers 24.1 schwenkbar an den ersten Förderbereich 11 angekoppelt sein. Wie vorliegend kann vorgesehen sein, dass das dritte Schwenklager 24.1 förderbereichseitig an dem ersten Verstärkungselement 11.2 vorgesehen ist. Beabstandet von dem dritten Schwenklager 24.1 kann das Führungselement 24 wie vorliegend mittels eines vierten Schwenklagers 22.3 schwenkbar an dem Hebelelement 22 angekoppelt sein.

Es ist jedoch auch denkbar, dass das Führungselement 24 mittels des vierten Schwenklagers 22.3 schwenkbar an dem Übertragungselement 21.2 angekoppelt ist, insbesondere, wenn das Stellelement 21.1 schwenkbar an dem ersten Förderbereich 11 vorgesehen ist, wie dies zuvor beschrieben wurde.

Mittels des Führungselements 24 kann bei einer Verstellbewegung des zweiten Förderbereichs 12 um die zweite Schwenkachse 25 das Hebelelement 22 sicher geführt werden. Das vierte Schwenklager 22.3 kann hierbei eine Kreisbahn um das dritte Schwenklager 24.1 ausführen (vgl. auch Fig. 6). Insbesondere kann mittels des Führungselements 24 sichergestellt werden, dass bei einer Verstellung des zweiten Förderbereichs 12 keine oder nur geringe Querkräfte auf das Übertragungselement 21.2 einwirken.

In den Figuren ist aufgrund der Seitenansicht nur ein Klappmechanismus 20 erkennbar. Vorzugsweise kann auf der quer zur Förderrichtung FR gegenüberliegenden Seite ein zumindest teilweise gleichartig ausgestalteter Klappmechanismus 20 vorgesehen sein. Denkbar ist auch, dass zumindest einzelne oder mehrere Komponenten des Klappmechanismus 20 auf gegenüberliegenden Seiten der Fördereinrichtung 10 vorgesehen sind.

In Figur 6 ist eine schematische Seitenansicht der Fördereinrichtung 10 in der eingeklappten Faltstellung zu sehen. In der Faltstellung kann der Abwurfbereich 16 oberhalb des ersten Förderbereichs 11 angeordnet sein. Es ist denkbar, dass der zweite Förderbereich 12 im Faltzustand vollständig, beispielsweise aufliegend, auf den ersten Förderbereich 11 geklappt wird. Vorzugsweise kann jedoch, wie vorliegend dargestellt, ein Abstand bzw. ein gewisser Öffnungswinkel zwischen den Förderbereichen 11, 12 verbleiben.

Wie ein Vergleich der Figuren 5 und 6 ergibt, kann durch das Verschwenken des zweiten Förderbereichs 12 in die Faltstellung die Gesamtlänge der Fördereinrichtung 10 in Förderrichtung FR verringert werden. Somit kann sich bereits hieraus eine für den Transport vorteilhafte Verringerung der Dimensionen der Fördereinrichtung 10 ergeben.

Deutlich wird aus den Figuren jedoch auch, dass durch das Verschwenken des zweiten Förderbereichs 12 in die Faltstellung der Anstellwinkel α der Fördereinrichtung 10 verringert werden kann. Dementsprechend kann die Fördereinrichtung 10 zeit- und kostensparend gleichzeitig geklappt und abgesenkt werden. Besonders vorteilhaft für einen Transport lassen sich sowohl die Länge als auch die Höhe der Fördereinrichtung 10 in einem Arbeitsgang verringern.

Ein Absenken kann sich insbesondere dadurch ergeben, dass in der Faltstellung eine gedachte Verbindungslinie zwischen der zweiten Anbindung 17 und der Koppelstelle 34 des Zugmittels 30 bei einem bestimmten Anstellwinkel α kürzer ist als in der Förderstellung. Dies kann insbesondere auf die Beabstandung der zweiten Anbindung 17 zu der zweite Schwenkachse 25 zurückzuführen sein.

Da die Koppelstelle 34 von der ersten Schwenkachse 15.1 beabstandet angeordnet ist, ist die gedachte Verbindungslinie bei einem verringerten Anstellwinkel α kürzer als bei einem größeren Anstellwinkel α. Wenn das Zugmittel 30 bevorzugt eine feste Länge aufweist, kann sich die Fördereinrichtung 10 somit um die erste Schwenkachse 15.1 absenken, wenn der zweite Förderbereich 12 in die Faltstellung überführt wird.

Besonders vorteilhaft kann bei einer Verringerung des Anstellwinkels α auch erreicht werden, dass sich das aufnahmeseitige Ende 11.5 des ersten Förderbereichs 11 anhebt. Dies kann insbesondere dadurch erreicht werden, dass die erste Anbindung 15 in einem Abstand von dem aufnahmeseitigen Ende 11.5 angeordnet ist. Es lässt sich also auch eine Vergrößerung der Bodenfreiheit, insbesondere für Transportzwecke, erreichen, wenn der zweite Förderbereich 12 aus der Förderstellung in die Faltstellung überführt wird.

In Figur 7 ist eine schematische Darstellung der Kraft- und Momentenverhältnisse an der Fördereinrichtung 10 dargestellt.

Bevorzugt kann durch eine Selbsthemmung verhindert sein, dass der zweite Förderbereich 12 selbsttätig aus der Förderstellung in die Faltstellung verstellt wird.

Wie in der Figur 7 dargestellt ist, kann der erste Förderbereich 11 einen ersten Massenschwerpunkt 11.3 aufweisen, in dem eine erste Gewichtskraft F₁₁ angreift. Ebenfalls kann der zweite Förderbereich 12 einen zweiten Massenschwerpunkt 12.3 aufweisen, in dem eine zweite Gewichtskraft F₁₂ angreift.

Für eine erste Betrachtung der Kraft- und Momentenverhältnisse an der Fördereinrichtung 10 kann zunächst die Schwenkbarkeit um die zweite Schwenkachse 25 unbeachtet bleiben, sodass gedanklich zunächst von einer starren Verbindung zwischen den Förderbereichen 11, 12 ausgegangen werden kann.

Damit die Fördereinrichtung 10 in dieser Betrachtung im Gleichgewicht steht, übt das Zugmittel 30 auf die zweite Anbindung 17 eine Zugkraft F₃₀ aus, deren Moment bezüglich der ersten Schwenkachse 15.1 mit der Summe der Momente der ersten und der zweiten Gewichtskraft F₁₁, F₁₂ im Gleichgewicht steht. Mit anderen Worten ergibt sich die Zugkraft F₃₀ aus der Lage der Schwerpunkte, den Gewichtskräften und der Lage der Anbindungen. Die Gewichtskräfte und die Lage der Schwerpunkte können selbstverständlich gegebenenfalls auf der Fördereinrichtung 10 befindliches Material und dessen Massenverteilung berücksichtigen.

Für eine weitergehende Betrachtung der Selbsthemmung muss nun die die Schwenkbarkeit um die zweite Schwenkachse 25 berücksichtig werden, wobei jedoch die zweite Schwenkachse 25 vereinfachend als Festlager angesehen werden kann, das lediglich eine Drehung des zweiten Förderbereichs 12 erlaubt. Dementsprechend kann der erste Förderbereich 11 bei dieser Betrachtung unberücksichtigt bleiben.

Wie in der Figur 7 angedeutet ist, ergibt sich aus den einwirkenden Kräften ein Moment M₂₅ um die zweite Schwenkachse 25, das auf den zweiten Förderbereich 12 einwirkt. Das Moment M₂₅ ergibt sich aus der Summe der Momente der Zugkraft F₃₀ und der zweiten Gewichtskraft F₁₂ um die zweite Schwenkachse 25.

Eine Selbsthemmung kann dann insbesondere dadurch erreicht werden, dass die Summe der Momente der zweiten Gewichtskraft F₁₂ und der Zugkraft F₃₀ bezüglich der zweiten Schwenkachse 25 gleich Null ist oder einen positiven Betrag aufweist und in Richtung eines Schwenkens des zweiten Förderbereichs 12 in die Förderstellung gerichtet ist.

Hierzu kann insbesondere ein Abstand 27 der zweiten Anbindung 17 von der zweiten Schwenkachse 25 ausgelegt werden, um den Hebelarm der Zugkraft F₃₀ zu beeinflussen. Insbesondere kann der Abstand 27 derart ausgelegt werden, dass sich ein Moment der Zugkraft F₃₀ ergibt, das vorzugsweise geringer ist als das der zweiten Gewichtskraft F₁₂.

Darüber hinaus kann denkbar sein, die Lage der ersten Schwenkachse 15.1 und/oder der zweiten Schwenkachse 25 und/oder des ersten Massenschwerpunkts 11.3 und/oder des zweiten Massenschwerpunkts 12.3 und/oder der zweiten Anbindung 17 und/oder der Koppelstelle 34 und/oder den Betrag der ersten Gewichtskraft F₁₁ und/oder der zweiten Gewichtskraft F₁₂ entsprechend zu wählen.

Eine Selbsthemmung kann selbstverständlich auch durch Reibung in den Lagerstellen des der zweiten Schwenkachse 25 zugeordneten Schwenklagers oder des Klappmechanismus 20 erreicht oder unterstützt werden. Auch ist zusätzlich oder alternativ ist denkbar, dass der zweite Förderbereich 12 in der Förderstellung gegenüber dem ersten Förderbereich 11 überstreckt vorgesehen sein kann, wodurch ebenfalls eine Selbsthemmung erreicht oder unterstützt werden kann.

Figur 8 zeigt eine Seitenansicht der Materialverarbeitungseinrichtung 1 in einer bevorzugten Transportkonfiguration. Die Fördereinrichtung 10 kann sich hierbei in einer gegenüber der in den Figuren 1 und 2 gezeigten Betriebsposition um die dritte Schwenkachse 41 in die Transportposition geschwenkt befinden, wie dies bereits zu Figur 3 erläutert wurde.

Darüber hinaus kann sich die der zweite Förderbereich 12 der Fördereinrichtung 10 jedoch in der bevorzugten Transportkonfiguration gemäß Figur 8 auch in der eingeklappten Faltstellung befinden. Auf diese Weise kann eine Gesamthöhe und/oder eine Gesamtlänge der Materialverarbeitungseinrichtung 1 für einen Transport optimiert werden, wie ein Vergleich mit der Figur 3 verdeutlicht. Ferner kann auf die zuvor beschriebene Weise eine Bodenfreiheit unterhalb der Fördereinrichtung 10 vergrößert sein.

Im Folgenden wird die Funktionsweise des gezeigten Ausführungsbeispiels anhand einer Verstellung aus einer bevorzugten Betriebskonfiguration, wie sie in den Figuren 1 und 2 zu sehen ist, in eine bevorzugte Transportkonfiguration, wie sie in der Figur 8 zu sehen ist, erläutert.

Zunächst kann die Fördereinrichtung 10 in der Betriebskonfiguration vorliegen. Wenn nun eine Überführung in die Transportkonfiguration vorgenommen werden soll, kann die Fördereinrichtung 10 in einem ersten Schritt mittels der Schwenkeinrichtung 40 um die dritte Schwenkachse 41 aus der Betriebsposition in die Transportposition überführt werden. Somit kann ein in der Figur 3 gezeigter Zustand erreicht werden. Nun kann mittels des Klappmechanismus 20 in einem zweiten Schritt ein Einklappen des zweiten Förderbereichs 12 in die Faltstellung bewirkt werden. Somit kann die in der Figur 8 gezeigte Transportkonfiguration erreicht sein.

Selbstverständlich ist auch denkbar, die zuvor beschriebenen Schritte in umgekehrter Reihenfolge auszuführen. Bevorzugt kann jedoch, wie zuvor beschrieben, das Schwenken um die dritte Schwenkachse 41 als erster Schritt ausgeführt werden. In der Förderstellung kann nämlich das aufnahmeseitige Ende 11.5 des ersten Förderbereichs 11 vorteilhaft gegenüber der Faltstellung abgesenkt vorliegen. In dieser abgesenkten Lage kann es bei dem Schwenken um die dritte Schwenkachse 41 unterhalb eines Teils der Materialverarbeitungseinrichtung 1, vorzugsweise unterhalb des Chassis 2 und/oder eines Bereichs der Siebeinheit 6 hindurchgeführt werden.

Für eine Überführung aus der Transportkonfiguration in die Betriebskonfiguration kann in einem ersten Schritt mittels des Klappmechanismus 20 der zweite Förderbereich 12 in die Förderstellung überführt werden. Somit kann der in der Figur 3 gezeigte Zustand erreicht werden. Anschließend kann in einem zweiten Schritt die Fördereinrichtung 10 mittels der Schwenkeinrichtung 40 um die dritte Schwenkachse 41 aus der Transportposition in die Betriebsposition geschwenkt werden. Auch hier ist es denkbar, die Schritte in umgekehrter Reihenfolge auszuführen.

## Patentansprüche

1. Materialverarbeitungseinrichtung (1), insbesondere mobile
Materialverarbeitungseinrichtung (1),
mit einer Fördereinrichtung (10), insbesondere einem Förderband,
zur Förderung von verarbeitetem und/oder zu verarbeitendem Material in einer Förderrichtung (FR) zwischen einem Aufnahmebereich (13) und einem Abwurfbereich (16) der Fördereinrichtung (10),
wobei die Fördereinrichtung (10) einen ersten und einen zweiten Förderbereich (11, 12) aufweist,
wobei der erste Förderbereich (11) im Bereich einer ersten Anbindung (15) um ein erstes Gelenk mit einer ersten Schwenkachse (15.1) schwenkbar an der Materialverarbeitungseinrichtung (1) angekoppelt ist,
wobei der erste Förderbereich (11) und der zweite Förderbereich (12) mittels eines zweiten Gelenks mit einer zweiten Schwenkachse (25) miteinander verbunden sind,
wobei der zweite Förderbereich (12) mittels eines dritten Gelenks im Bereich einer zweiten Anbindung (17) mit einem Zugmittel (30) verbunden ist,
und wobei das erste, das zweite und das dritte Gelenk Teile eines Gelenkmechanismus, insbesondere eines Gelenkvierecks, bilden.

2. Materialverarbeitungseinrichtung (1) nach Anspruch 1,
**dadurch gekennzeichnet,**
**dass** das Zugmittel (30) einerseits im Bereich einer Koppelstelle (34) an die Materialverarbeitungseinrichtung (1), und andererseits im Bereich einer zweiten Anbindung (17) beabstandet zu der ersten Anbindung (15) an die Fördereinrichtung (10) angekoppelt ist,
**dass** der zweite Förderbereich (12) gegenüber dem ersten Förderbereich (11) um eine zweite Schwenkachse (25) des zweiten Gelenks zwischen einer eingeklappten Faltstellung und einer ausgeklappten Förderstellung schwenkbar gelagert ist,
und **dass** die zweite Anbindung (17) an dem zweiten Förderbereich (12) beabstandet zu der zweiten Schwenkachse (25) vorgesehen ist.

3. Materialverarbeitungseinrichtung (1) nach Anspruch 1 oder 2,
**dadurch gekennzeichnet,**
**dass** der Aufnahmebereich (13) im Bereich eines aufnahmeseitigen Endes (11.5) des ersten Förderbereichs (11) vorgesehen ist,
**dass** der Abwurfbereich (16) im Bereich eines abwurfseitigen Endes (12.6) des zweiten Förderbereichs (12) vorgesehen ist,
und **dass** vorzugsweise die zweite Schwenkachse (25) im Bereich eines dem aufnahmeseitigen Ende (11.5) gegenüberliegenden übergabeseitigen Endes (11.6) des ersten Förderbereichs (11) und eines dem abwurfseitigen Ende (12.6) gegenüberliegenden aufnahmeseitigen Endes (12.5) des zweiten Förderbereichs (12) vorgesehen ist.

4. Materialverarbeitungseinrichtung (1) nach einem der Ansprüche 1 bis 3,
**dadurch gekennzeichnet,**
**dass** die zweite Schwenkachse (25) mit der ersten Schwenkachse (15.1) einen Winkel von höchstens ± 5° einschließt, insbesondere parallel zu der ersten Schwenkachse (15.1) ausgerichtet ist,
wobei bevorzugt die erste Schwenkachse (15.1) mit der Horizontalen einen Winkel von höchstens ± 5° einschließt, insbesondere horizontal ausgerichtet ist, wobei weiter bevorzugt die erste Schwenkachse (15.1) mit der Förderrichtung (FR) einen Winkel zwischen 85° und 95° einschließt, insbesondere senkrecht zu der Förderrichtung (FR) ausgerichtet ist.

5. Materialverarbeitungseinrichtung (1) nach einem der Ansprüche 1 bis 4,
**dadurch gekennzeichnet,**
**dass** ein Abstand zwischen der zweiten Anbindung (17) und der ersten Anbindung (15) in der/einer eingeklappten Faltstellung geringer ist als in der/einer ausgeklappten Förderstellung des zweiten Förderbereichs (12),
und **dass**, vorzugsweise zumindest teilweise durch den geringeren Abstand, ein Anstellwinkel α zwischen dem ersten Förderbereich (11) und der Horizontalen in der Faltstellung geringer ist als in der Förderstellung des zweiten Förderbereichs (12).

6. Materialverarbeitungseinrichtung (1) nach einem der Ansprüche 1 bis 5,
**dadurch gekennzeichnet,**
**dass** die erste Anbindung (15) in Förderrichtung (FR) beabstandet von dem/einem aufnahmeseitigen Ende (11.5) des ersten Förderbereichs (11) vorgesehen ist.

7. Materialverarbeitungseinrichtung (1) nach einem der Ansprüche 1 bis 6,
**dadurch gekennzeichnet,**
**dass** der erste Förderbereich (11) und der zweite Förderbereich (12) je eine Oberseite (11.7, 12.7), eine Unterseite (11.8, 12.8) und eine Mittenebene (11.9, 12.9) aufweisen, wobei die Mittenebenen (11.9, 12.9) jeweils mittig zwischen Oberseite (11.7, 12.7) und Unterseite (11.8, 12.8) und parallel zu diesen verlaufen,
und **dass** die zweite Schwenkachse (25) und/oder die zweite Anbindung (17) zumindest in der/einer ausgeklappten Förderstellung des zweiten Förderbereichs (12) oberhalb der Mittenebenen (11.9, 12.9), bevorzugt oberhalb der Oberseiten (11.7, 12.7), vorgesehen ist/sind.

8. Materialverarbeitungseinrichtung (1) nach einem der Ansprüche 1 bis 7,
**dadurch gekennzeichnet,**
**dass** der zweite Förderbereich (12) in der/einer ausgeklappten Förderstellung derart selbsthemmend an dem ersten Förderbereich (11) angelenkt ist,
**dass** eine selbsttätige Verstellung des zweiten Förderbereichs (12) gegenüber dem ersten Förderbereich (11) in Richtung auf die/eine eingeklappte Faltstellung verhindert ist.

9. Materialverarbeitungseinrichtung (1) nach Anspruch 8,
**dadurch gekennzeichnet,**
**dass** der erste Förderbereich (11) einen ersten Massenschwerpunkt (11.3) aufweist, in dem eine erste Gewichtskraft (F₁₁) angreift,
**dass** der zweite Förderbereich (12) einen zweiten Massenschwerpunkt (12.3) aufweist, in dem eine zweite Gewichtskraft (F₁₂) angreift,
**dass** das Zugmittel (30) auf die zweite Anbindung (17) eine Zugkraft (F₃₀) ausübt, deren Moment bezüglich der ersten Schwenkachse (15.1) mit der Summe der Momente der ersten und der zweiten Gewichtskraft (F₁₁, F₁₂) im Gleichgewicht steht,
**dass**, zumindest wenn sich der zweite Förderbereich (12) in der ausgeklappten Förderstellung befindet,
die Summe der Momente der zweiten Gewichtskraft (F₁₂) und der Zugkraft (F₃₀) bezüglich der zweiten Schwenkachse (25) gleich Null ist oder einen positiven Betrag aufweist und in Richtung eines Schwenkens des zweiten Förderbereichs (12) in die Förderstellung gerichtet ist,
sodass die Selbsthemmung erreicht oder unterstützt ist.

10. Materialverarbeitungseinrichtung (1) nach Anspruch 9,
**dadurch gekennzeichnet,**
**dass** die Lage der ersten Schwenkachse (15.1) und/oder der zweiten Schwenkachse (25) und/oder des ersten Massenschwerpunkts (11.3) und/oder des zweiten Massenschwerpunkts (12.3) und/oder der zweiten Anbindung (17) und/oder der/einer Koppelstelle (34), in deren Bereich das Zugmittel (30) an die Materialverarbeitungseinrichtung (1) angekoppelt ist,
und/oder der Betrag der ersten Gewichtskraft (Fn) und/oder der zweiten Gewichtskraft (F₁₂) derart gewählt sind, dass die Selbsthemmung erreicht oder unterstützt ist,
wobei vorzugsweise die Lage der zweiten Anbindung (17) in der Transportrichtung des zweiten Förderbereichs (12) in einem Bereich angeordnet ist, der der zweiten Schwenkachse (25) zugewandt ist und nicht weiter als 30 % der Erstreckung des zweiten Förderbereichs (12) in seiner Transportrichtung von der zweiten Schwenkachse (25) beabstandet ist, weiter bevorzugt nicht weiter als 15 %, besonders bevorzugt nicht weiter als 10 %, insbesondere nicht weiter als 5 %.

11. Materialverarbeitungseinrichtung (1) nach einem der Ansprüche 1 bis 10,
**dadurch gekennzeichnet,**
**dass** die Fördereinrichtung (10) einen Klappmechanismus (20) mit zumindest einem Klappantrieb (21) aufweist,
**dass** der Klappantrieb (21) eine Verstellung des zweiten Förderbereichs (12) zwischen der Faltstellung und der Förderstellung bewirkt oder zumindest unterstützt,
wobei der Klappantrieb (21) ein Stellelement (21.1), insbesondere einen Hydraulikzylinder, besonders bevorzugt einen doppeltwirkenden Hydraulikzylinder,
und ein gegenüber dem Stellelement (21.1) verstellbares Übertragungselement (21.2), vorzugsweise eine Kolbenstange, aufweist.

12. Materialverarbeitungseinrichtung (1) nach Anspruch 11,
**dadurch gekennzeichnet,**
**dass** das Stellelement (21.1) an den ersten Förderbereich (11) angekoppelt ist, und dass ein Hebelelement (22) vorgesehen ist, das einerseits mittels eines ersten Schwenklagers (22.1) schwenkbar an das Übertragungselement (21.2) angekoppelt ist, und das andererseits mittels eines zweiten Schwenklagers (22.2) beabstandet von der zweiten Schwenkachse (25) schwenkbar an den zweiten Förderbereich (12) angekoppelt ist.

13. Materialverarbeitungseinrichtung (1) nach Anspruch 11 oder 12,
**dadurch gekennzeichnet,**
**dass** ein Führungselement (24) vorgesehen ist, das einerseits mittels eines dritten Schwenklagers (24.1) schwenkbar an dem ersten Förderbereich (11) angekoppelt ist, und das andererseits mittels eines vierten Schwenklagers (22.3) schwenkbar an dem Übertragungselement 21.2, vorzugsweise an dem Hebelelement (22) angekoppelt ist,
und **dass** während eines Schwenkens des zweiten Förderbereichs (12) um die zweite Schwenkachse (25) das Hebelelement (22) mittels des Führungselements (24) an dem ersten Förderbereich (11) geführt ist, wobei vorzugsweise das Hebelelement (22) im Bereich des vierten Schwenklagers (22.3) auf einer Kreisbahn geführt ist.

14. Materialverarbeitungseinrichtung (1) nach einem der Ansprüche 1 bis 13,
**dadurch gekennzeichnet,**
**dass** der/ein Klappantrieb (21) zumindest in der Förderstellung unterhalb von/der Mittenebenen (11.9, 12.9) der Förderbereiche (11, 12), bevorzugt unterhalb von/der Unterseiten (11.8, 12.8) der Förderbereiche (11, 12), vorgesehen ist.

15. Materialverarbeitungseinrichtung (1) nach einem der Ansprüche 1 bis 14,
**dadurch gekennzeichnet,**
**dass** die Fördereinrichtung (10) um eine dritte Schwenkachse (41) zwischen einer Betriebsposition und einer Transportposition schwenkbar an der Materialverarbeitungseinrichtung (1) gelagert ist,
wobei die dritte Schwenkachse (41) quer zu der ersten Schwenkachse (15.1) verläuft, vorzugsweise mit der ersten Schwenkachse (15.1) einen Winkel zwischen 85° und 95° einschließt, insbesondere senkrecht zu der ersten Schwenkachse (15.1) ausgerichtet ist,
wobei insbesondere die dritte Schwenkachse (41) mit der Vertikalen einen Winkel von höchstens ± 5° einschließt, besonders bevorzugt vertikal ausgerichtet ist.

16. Materialverarbeitungseinrichtung (1) nach Anspruch 15,
**dadurch gekennzeichnet,**
**dass** der Aufnahmebereich (13) in der Betriebsposition im Bereich einer Übergabeeinheit (8) eines ersten Aggregats der Materialverarbeitungseinrichtung (1), insbesondere im Bereich eines Stichbands einer Siebeinheit (6), zur Aufnahme zu fördernden Materials von dem ersten Aggregat angeordnet ist, und dass der Abwurfbereich (16) in der Betriebsposition im Bereich einer Aufgabeeinheit (3) eines weiteren Aggregats der Materialverarbeitungseinrichtung (1) oder eines Aggregats einer weiteren Materialverarbeitungseinrichtung (1), insbesondere im Bereich eines Aufgabetrichters eines Brechaggregats (4), angeordnet ist, zur Übergabe des aufgenommenen Materials an das weitere Aggregat,
wobei die Fördereinrichtung (10) in der Transportposition gegenüber der Betriebsposition um die dritte Schwenkachse (41) vorzugsweise um mindestens 170°, besonders bevorzugt um 180° verschwenkt ist.

17. Verfahren zur Verstellung einer Fördereinrichtung (10) einer Materialverarbeitungseinrichtung (1),
wobei ein zweiter Förderbereich (12) der Fördereinrichtung (10) gegenüber einem ersten Förderbereich (11) der Fördereinrichtung (10) zwischen einer eingeklappten Faltstellung und einer ausgeklappten Förderstellung verschwenkt wird,
wobei durch ein Verschwenken des zweiten Förderbereichs (12) auf die Faltstellung hin ein Abstand zwischen einer zweiten Anbindung (17) eines Zugmittels (30) an den zweiten Förderbereich zu einer ersten Anbindung (15) des ersten Förderbereichs (11) an die Materialverarbeitungseinrichtung (1) verringert wird, und durch ein Verschwenken auf die Förderstellung hin vergrößert wird, und wobei durch eine Verringerung des Abstands der ersten und der zweiten Anbindung (15, 17) ein Anstellwinkel α zwischen dem ersten Förderbereich (11) und der Horizontalen verringert, und durch eine Vergrößerung des Abstands vergrößert wird.

18. Verfahren nach Anspruch 17 mit einer Materialverarbeitungseinrichtung (1) nach einem der Ansprüche 1 bis 16.
